# EUROPÄISCHE PATENTANMELDUNG

(11) **EP 4 541 193 A1**
(43) Veröffentlichungstag der Anmeldung: **23.04.2025**
(21) Anmeldenummer: 23204151.7
(22) Anmeldetag: 17.10.2023
(51) Int. Cl.: A21C 1/02, A21C 1/14, B01F 29/80, B01F 33/501, B01F 35/42

(54) **BOTTICHWAGEN FÜR INDUSTRIELLE TEIGPRODUKTIONSANLAGE MIT FAHRERLOSEN TRANSPORTFAHRZEUGEN**

(71) Anmelder: DIOSNA Dierks & Söhne GmbH, 49086 Osnabrück (DE)
(72) Erfinder: OEVERMANN, Henrik, 49448 Quernheim (DE); FISSMANN, Christian, 49593 Bersenbrück (DE); GHANI, Hashem, 49086 Osnabrück (DE)
(74) Vertreter: Ege Lee & Roider Patentanwälte

(57) **Zusammenfassung**

Die Erfindung betrifft einen Bottichwagen (6), der in eine Knetmaschine einer industriellen Teigproduktionsanlage einbringbar ist, aufweisend ein Untergestell (9) und einen Bottich (7), der drehbar auf dem Untergestell (9) gelagert ist, wobei das Untergestell (9) wenigstens eine Haltevorrichtung (10) mit zwei daran gelagerten Rädern (11') und eine Stützgeometrie (12) aufweist, wobei an der Stützgeometrie (12) wenigstens ein Stützrad (13) gelagert ist, und wobei die Haltevorrichtung (10) und die Stützgeometrie (12) derart ausgebildet sind, dass sich zwischen einer Unterseite der Haltevorrichtung (10) und/oder einer Unterseite der Stützgeometrie (12) und einer Radaufstandsfläche ein Freiraum ergibt, in den ein Lastaufnahmemittel (2) eines fahrerlosen Transportfahrzeuges (1) einbringbar ist.

## Beschreibung

Die vorliegende Erfindung betrifft einen Bottichwagen mit den Merkmalen des Oberbegriffs des Anspruchs 1, eine Verwendung eines solchen Bottichwagens mit einem fahrerlosen Transportfahrzeug, sowie ein Verfahren zum Nachrüsten eines Bottichwagens.

In industriellen Teigproduktionsanlagen werden Nahrungsmittelteige, insbesondere Backteige, wie Weizen- und Roggenteige insbesondere deren Vorteige für die Backwarenindustrie hergestellt. Es ist bekannt in industriellen Teigproduktionsanlagen fahrerlose Transportfahrzeuge zum Transport von Bottichen einzusetzen. Fahrerlose beziehungsweise mannlose Transportfahrzeuge werden in einem Automatik-Betrieb ohne aktives Einwirken eines Fahrers gesteuert. "Mannlos" beziehungsweise "fahrerlos" bezieht sich lediglich auf das tatsächliche Eingreifen eines Fahrers in den Steuerungsvorgang. Fahrerlose Transportsysteme (FTS bzw. engl. Automated Guided Vehicle (AGV)) setzen sich zusammen aus den selbstfahrenden Elektrofahrzeugen, die über Induktionsschleifen oder Laser mittels Computer gesteuert und programmiert werden. Die FTS finden ihren Weg über Bodenführungsschienen (mechanisch), Streifen auf dem Boden (optisch), Leitdrähte (elektromagnetisch) oder über Laserstrahlen (optisch). FTS weisen einen eigenen Fahrantrieb auf und sind automatisch gesteuert.

Die in industriellen Teigproduktionsanlagen bisher eingesetzten fahrerlosen Transportfahrzeuge sind Unterfahr-Transportsysteme, die unter den zu transportierenden Bottich fahren, um diesen zu befördern. Durch den Einsatz von Unterfahr-Transportsystemen ergibt sich jedoch der Nachteil, dass die Bottiche einen zu großen Abstand zum Boden für weiterverarbeitende Maschinen, wie beispielsweise Kneter und Hebekipper aufweisen.

Es ist daher Aufgabe der vorliegenden Erfindung einen Bottichwagen anzugeben, der von alternativen fahrerlosen Transportfahrzeugen aufgenommen und transportiert werden kann.

Diese Aufgabe wird von einen Bottichwagen mit den Merkmalen des Anspruchs 1, von einer Verwendung eines solchen Bottichwagens mit einem fahrerlosen Transportfahrzeug, sowie von einem Verfahren zum Nachrüsten eines Bottichwagens für den Transport mit einem fahrerlosen Transportfahrzeug gelöst.

Demnach ist ein Bottichwagen vorgesehen, der in eine Knetmaschine einer industriellen Teigproduktionsanlage einbringbar ist, aufweisend ein Untergestell und einen Bottich, der drehbar auf dem Untergestell gelagert ist, wobei das Untergestell wenigstens eine Haltevorrichtung mit zwei daran gelagerten Rädern und eine Stützgeometrie aufweist, wobei an der Stützgeometrie wenigstens ein, bevorzugt um eine vertikale Achse verschwenkbares Stützrad gelagert ist. Die Haltevorrichtung und die Stützgeometrie sind derart ausgebildet, dass sich zwischen einer Unterseite der Haltevorrichtung und/oder einer Unterseite der Stützgeometrie und einer Radaufstandsfläche, auf der die Räder und Stützräder aufstehen, ein Freiraum ergibt, in den ein Lastaufnahmemittel eines fahrerlosen Transportfahrzeuges einbringbar ist. In anderen Worten weist der Bottichwagen eine Bodenfreiheit in einem Bereich des einzubringenden Lastaufnahmemittels auf, die groß genug ist, das Lastaufnahmemittel aufzunehmen. Der Bottichwagen ist dadurch für den Transport mittels fahrerlosem Transportfahrzeug mit beispielsweise Gabelzinken als Lastaufnahmemittel geeignet. Bevorzugt ist der Mittenabstand der Gabelzinken derart gewählt, dass EUR-Paletten (1200*800*144 mm) und Industrie-Paletten (1200*1000*150 mm) transportiert werden können. Die Gabelzinken weisen vorzugsweise eine standardisierte FEM Aufhängung auf. Das fahrerlose Transportfahrzeug ist vorzugsweise ein Spreizenstapler.

Der Freiraum kann beispielsweise durch die Stützgeometrie in zwei Bereiche getrennt sein, so dass sich für jeden Gabelzinken des Lastaufnahmemittels ein Raum zur Aufnahme unterhalb der Achse zwischen den Rädern ergibt.

Die Höhe des Freiraums liegt bevorzugt zwischen 99 mm und 115 mm, insbesondere zwischen 100 mm und 105 mm. Dann kann sichergestellt werden, dass bei dem Einsatz von Gabelzinken, diese ohne Behinderung in den Freiraum eingefahren werden können.

Die Räder weisen einen Durchmesser auf, der in einem Bereich von 250 mm und 350 mm liegt, insbesondere 300 mm ist. Dadurch kann die Haltevorrichtung weit genug von der Radaufstandsfläche entfernt liegen und Raum zur Aufnahme des Lastaufnahmemittels machen.

In einer bevorzugten Ausführungsform sind zwei Stützräder vorgesehen, die jeweils an einem Ende der Stützgeometrie angeordnet sind. Die Stützräder können kleiner als die Räder der Achse ausgebildet sein. Es ist aber auch denkbar, nur ein Stützrad anzuordnen, welches bevorzugt auf einer einem Griff zum manuellen Lenken gegenüberliegenden Seite liegt.

Vorzugsweise ist an der Stützgeometrie wenigstens ein Funktionselement angeordnet, insbesondere geschraubt oder geschweißt, das den Freiraum, insbesondere nach oben, begrenzt. Das Funktionselement dient als Anlagefläche des Bottichwagens zur Auflage des Bottichwagens auf der Oberseite des Lastaufnahmemittels beim Anheben des Lastaufnahmemittels. Der Bottichwagen kann somit mit der Unterseite der Achse und der Anlagefläche auf dem Lastaufnahmemittel sicher aufliegen, ohne zu kippeln.

Das wenigstens eine Funktionselement liegt bevorzugt zwischen Stützrad und Haltevorrichtung in Längsrichtung der Stützgeometrie und weist eine Breite parallel zur Radchse auf, die in einem Bereich zwischen 280 mm und 500 mm liegt. Wenn das Lastaufnahmemittel als zwei parallel liegende Gabelzinken ausgebildet ist, erstreckt sich das Funktionselement bevorzugt derart, dass es zumindest teilweise auf beiden Gabelzinken beim Anheben des Bottichwagens gleichzeitig aufliegt.

Die Anlagefläche des Funktionselements liegt bevorzugt in einer Ebene mit einer Unterseite der Haltevorrichtung.

Die Tiefe der Auflagefläche beträgt bevorzugt 10 mm bis 60 mm.

Der Bottich ist bevorzugt mit einer Welle verbunden, auf der unterhalb des Bottichs eine Bottichscheibe drehfest sitzt, die mit der Knetmaschine zum Drehen des Bottichs in Wirkverbindung bringbar ist.

Weiterhin ist eine Verwendung eines zuvor beschriebenen Bottichwagens zum Transport durch ein fahrerloses Transportfahrzeug in einer industriellen Teigproduktionsanlage vorgesehen, wobei das fahrerlose Transportfahrzeug ein aktives Lastaufnahmemittel (insbesondere zwei Gabelzinken, bevorzugt für EUR Paletten genormt) aufweist. Es kann vorgesehen sein, dass ein Fördern des fahrerlosen Transportfahrzeugs innerhalb der Radbasis erfolgt. Herkömmliche Bottichwagen konnten bisher von solchen fahrerlosen Transportfahrzeugen nicht sicher transportiert werden.

Außerdem ist ein Verfahren zum Nachrüsten eines Bottichwagens für den Transport mit einem fahrerlosen Transportfahrzeug, der in eine Knetmaschine einer industriellen Teigproduktionsanlage einbringbar ist, vorgesehen. Der Bottichwagen weist ein Untergestell und einen Bottich, der drehbar auf dem Untergestell gelagert ist, und einen Griff zum manuellen Verfahren auf, wobei das Untergestell eine Haltevorrichtung mit zwei daran gelagerten Rädern und eine Stützgeometrie aufweist, und wobei an der Stützgeometrie wenigstens ein, bevorzugt um eine vertikale Achse verschwenkbares Stützrad gelagert ist, und wobei das Verfahren die folgenden Schritte umfasst:
- Vorsehen von zwei unterschiedlichen Achspositionen, die senkrecht zu der Längsrichtung der Haltevorrichtung zueinander beabstandet sind,
und für den Transport mit einem fahrerlosen Transportfahrzeug:
- Aufsetzen von Rädern in einer griffnahen Position mit einem Durchmesser, der in einem Bereich von 250 mm und 350 mm, insbesondere 300 mm liegt, und dadurch Anheben der Unterseite der Achse relativ zur Radaufstandsfläche.

Durch das Anheben wird ein Freiraum zwischen der Unterseite der Haltevorrichtung und der Radaufstandsfläche gebildet, der es erlaubt Lastaufnahmemittel unterhalb der Achse einzubringen und den Bottichwagen nach der Aufnahme des Lastaufnahmemittels durch Verfahren der Lastaufnahmemittel anzuheben.

Die griffnahe Achsposition wird gewählt, damit trotz der größeren Räder der Bottichwagen weit genug in eine teigverarbeitende Maschine, wie beispielsweise einen Kneter hineingefahren werden kann und die herkömmlich verwendeten Maschinen ohne Modifikation eingesetzt werden können.

Vorzugsweise ist weiterhin das Anbringen eines Funktionselementes an der Unterseite der Stützgeometrie vorgesehen, so dass der Bottichwagen zumindest auf zwei beabstandeten linienförmigen Auflageflächen gerade und dadurch kippfrei aufliegt.

Wenn ein Transport mit einem fahrerlosen Transportfahrzeug nicht vorgesehen ist und der Bottichwagen ausschließlich manuell verfahren wird, kann das Verfahren vorsehen, dass Räder auf die griffferne Position aufgesetzt werden und die Räder einen Durchmesser von etwa 200 mm aufweisen.

Der Bottichwagen und/oder die Lastaufnahmemittel können, wie zuvor beschrieben, ausgebildet sein.

Eine bevorzugte Ausführungsform der Erfindung wird nachfolgend anhand der Zeichnungen näher erläutert. Gleichartige oder gleichwirkende Bauteile werden in den Figuren mit denselben Bezugszeichen bezeichnet. Es zeigen:
- Figur 1:: eine räumliche Darstellung eines fahrerlosen Transportfahrzeuges mit einem aufgenommenen Bottichwagen,
- Figur 2:: eine zweite Darstellung des fahrerlosen Transportfahrzeuges mit dem aufgenommenen Bottichwagen, sowie
- Figur 3:: eine Detailansicht eines Bottichwagens.

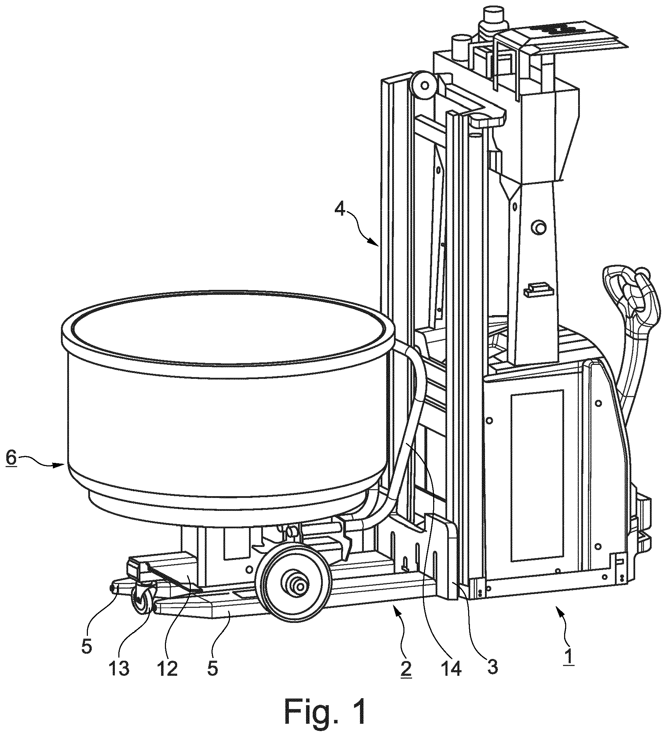

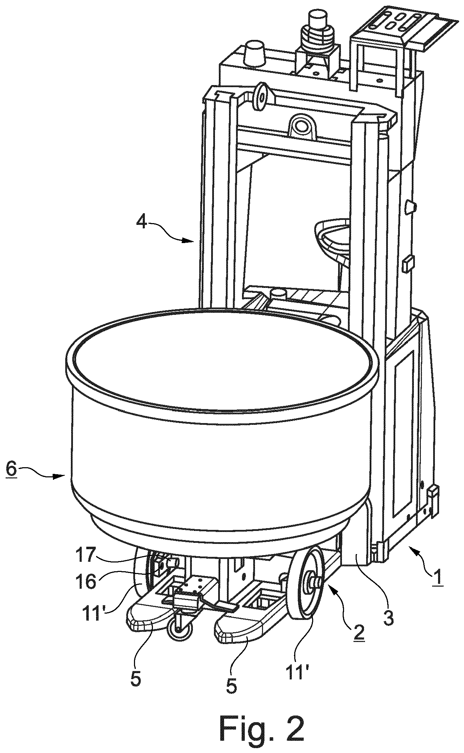

In den Figuren 1 und 2 ist ein fahrerloses Transportfahrzeug 1 mit einem aktiven Lastaufnahmemittel 2 dargestellt. Das Lastaufnahmemittel 2 ist doppelgabelförmig und an einem Gabelträger 3 befestigt, der ein auf- und abwärts beweglicher Schlitten ist und an einem Hubgerüst 4 angebracht ist. Das Lastaufnahmemittel 2 weist somit zwei zueinander beabstandete Gabelzinken 5 auf, deren Mittenabstand fest ist und insbesondere etwa 380 mm beträgt. Der Mittenabstand der Gabelzinken 5 ist bevorzugt derart gewählt, dass EUR-Paletten (1200*800*144 mm) und Industrie-Paletten (1200*1000*150 mm) transportiert werden können. Das fahrerlose Transportfahrzeug 1 weist eine maximale Hubhöhe in einem Bereich von 1,00 m bis 3,00 m auf, insbesondere zwischen 2,70 m und 2,90 m.

Bei dem fahrerlosen Transportfahrzeug 1 handelt es sich um einen Spreizenstapler (auch Radarmstapler) mit starren Gabeln und mit unneigbarem Hubgerüst, bei dem das Fördern innerhalb der Radbasis erfolgt, was die Fahrzeugstabilität erhöht. Das fahrerlose Transportfahrzeug 1 hat auf der Seite des Lastaufnahmemittels 2, welche als vorne liegend angesehen wird, zwei vordere Stützräder, die jeweils an einem Radarm ohne Antrieb und Lenkung angebracht sind (nicht dargestellt). Die Radarme sind in Schmallspurausführung gebaut und liegen unterhalb der Lastaufnahmemittel 2 und sind in Draufsicht von diesen überdeckt. Auf die Verwendung von Gegengewichten kann dadurch verzichtet werden.

Das dargestellte fahrerlose Transportfahrzeug 1 transportiert einen Bottichwagen 6 in einer industriellen Teigproduktionsanlage. In industriellen Teigproduktionsanlagen werden Nahrungsmittelteige für die Backindustrie industriell und halb- oder vollautomatisiert hergestellt.

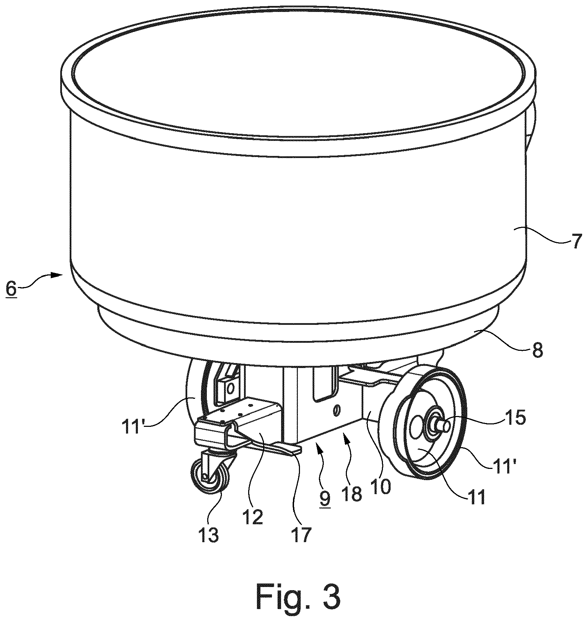

Der Bottichwagen 6 ist im Detail in Figur 3 dargestellt. Er umfasst einen (Edelstahl-)Bottich 7, der mit einer Welle verbunden ist. Auf der Welle sitzt drehfest unterhalb des Bottichs 7 eine Bottichscheibe 8, die eine umlaufende Verzahnung aufweist. Die Verzahnung ist mit einem Zahnrad einer Knetmaschine zum Drehen des Bottichs 7 in Wirkverbindung bringbar. Es ist auch denkbar, dass die Bottichscheibe an der Außenseite glatt, wie dargestellt, ausgebildet ist und von einem Reibradantrieb antreibbar ist. Unterhalb der Bottichscheibe 8 kann die Welle von einer Nabenscheibe konzentrisch umgeben, die mit einem Untergestell 9 des Bottichwagens 6 verbunden ist und somit ortsfest gehalten ist. Bei Rotation des Bottichs 7 dreht sich die Nabenscheibe nicht mit. Das Untergestell 9 des Bottichwagens 6 weist eine Achse mit zwei Rädern 11 auf. Die Räder sind jeweils an einem Schenkel einer u-förmigen Haltevorrichtung 10 mit einem zwischen den Schenkel liegendem Zwischenelement gehalten bzw. drehbar gelagert. Die Räder können miteinander verbunden sein. Senkrecht zu dem Zwischenelement dieser Haltevorrichtung 10 erstreckt sich eine Stützgeometrie 12, an der endseitig ein Stützrad 13 angeordnet ist. Die Rotationsachsen aller Räder 11,13 liegen bei Geradeausfahrt parallel zueinander. Die Stützräder 13 sind um eine vertikale Achse verschwenkbar an der Stützgeometrie 12 gelagert. Dadurch lässt sich der Bottichwagen 6 besonders einfach lenken. Es ist eine Feststelleinrichtung vorgesehen, mittels der das jeweilige Stützrad 13 in Geradeausstellung feststellbar ist. Es ist auch denkbar, wenn ein manuelles Lenken nicht vorgesehen ist, das Stützrad fest auszubilden. Zusätzlich kann an dem Untergestell 9 des Bottichwagens 6 ein in Figur 1 ersichtlicher Griff 14 zum manuellen Verfahren und Lenken durch einen Bediener angeordnet sein. Das Stützrad 13 liegt, wie in Figur 1 ersichtlich, auf der grifffernen Seite der Stützgeometrie 12. Es ist denkbar, zwei Stützräder anzuordnen, die jeweils an einem Ende der Stützgeometrie liegen.

Herkömmlicherweise haben Bottichwagen Räder mit relativ kleinen Durchmessern im Bereich von 200 mm. Der Abstand zwischen einer Räderaufstandsfläche (im Folgenden auch Boden genannt), auf der der Bottichwagen sich bewegt und einer Unterseite der Achse ist dadurch ebenfalls relativ klein. Ein solcher Bottichwagen kann von dem zuvor beschriebenen fahrerlosen Transportfahrzeug nicht vom Boden aufgenommen werden. Die Bottichwagen werden daher erfindungsgemäß für den Transport mittels fahrerloser Transportfahrzeuge umgerüstet bzw. entsprechend gefertigt.

In Figur 3 ist das Umrüsten eines Bottichwagens 8 schematisch dargestellt. Die kleinen Räder 11 werden durch Räder 11' mit einem Durchmesser ersetzt, der in einem Bereich von 250 bis 350 mm, bevorzugt bei etwa 300 mm liegt. Die Drehachse 15 der Räder 11' wird dadurch relativ zum Boden auf eine Höhe in einem Bereich von 40 mm bis 100 mm, bevorzugt etwa 65 mm bei einem Rad 11' mit einem Durchmesser von etwa 300 mm angehoben.

Wie aus Figur 2 ersichtlich gibt es zwei Achspositionen 16,17 zum Anbringen der Räder. Die Achspositionen 16,17 einer Seite können auf einer gemeinsamen Geraden liegen, die parallel zur Radaufstandsfläche verläuft und sich in Längsrichtung der Stützgeometrie erstreckt. Es ist aber auch denkbar, die Achspositionen 16,17 versetzt um einen Betrag von 10 mm bis 15 mm vorzusehen, wobei die griffnahe Position 17 näher zur Radaufstandsfläche liegt. Die Achspositionen 16,17 sind in Längsrichtung zueinander beabstandet. Beim Einsatz des Rades 11' mit dem größeren Durchmesser wird die griffnahe Position 17 verwendet. Das Versetzen der Räder auf eine andere Achsposition ist notwendig, damit beispielsweise bei der Verwendung des Bottichwagens in einem Kneter sichergestellt werden kann, dass die relative Position bzw. Einfahrtiefe bei Verarbeitung des Teiges dieselbe bleibt.

Wie in Figur 3 dargestellt, wird an die Stützgeometrie 14 ein Funktionselement 17 angebracht, insbesondere geschraubt oder geschweißt. Das Funktionselement 17 liegt zwischen Stützrad 13 und Haltevorrichtung 10 in Längsrichtung der Stützgeometrie, unmittelbar hinter dem Stützrad 13. Das Funktionselement 17 bildet eine Anlagefläche auf der Unterseite aus. Das Funktionselement 17 bzw. die Anlagefläche erstreckt sich über eine Breite parallel zur Achse 10, die bevorzugt in einem Bereich von 280 mm bis 500 mm, vorzugsweise 300 mm liegt. Die Tiefe des Funktionselements 17 bzw. die Anlagefläche beträgt bevorzugt 10 mm bis 60 mm, insbesondere 10 mm. Der mittlere Abstand zwischen der Anlagefläche und der Haltevorrichtung 10 senkrecht zur Längsachse des Zwischenelementes der Haltevorrichtung 10 beträgt bevorzugt 280 mm bis 400mm, insbesondere 320 mm.

Die Anlagefläche liegt bevorzugt in einer Ebene mit der Unterseite des Zwischenelementes der Haltevorrichtung 10, so dass die Bottichwagenachse (Hochachse) möglichst senkrecht zur Gabelfläche steht und der Bottichwagen 6 möglichst wenig kippelt. Die Haltevorrichtung 10 bzw. die Unterseite der Haltevorrichtung 10 und die Anlagefläche des Funktionselementes 17 begrenzen nach oben einen Freiraum 18 zur Aufnahme eines Lastaufnahmemittels, der seitlich durch die Räder 11' begrenzt ist. Der Freiraum 18 ist so ausgebildet, dass die Lastaufnahmemittel in horizontaler Richtung in den Freiraum 18, bevorzugt auf der Seite des Griffs, wenn dieser vorhanden ist, zum Transport des Bottichwagens eingefahren werden können. In anderen Worten ist die sogenannte Bodenfreiheit im Bereich des einzubringenden Lastaufnahmemittels durch den Freiraum definiert. Die Bodenfreiheit bezeichnet den Abstand zur Radaufstandsfläche vom tiefsten Punkt im Aufnahmebereich des Lastaufnahmemittels. Sowohl die Unterseite der Haltevorrichtung 10 als auch die Anlagefläche des Funktionselementes 17 definieren die Bodenfreiheit, da sie bevorzugt denselben Abstand haben. Der Bottichwagen kann im angehobenen Zustand mittels der Anlagefläche und der Unterseite der Haltevorrichtung auf der Oberseite des Lastaufnahmemittels aufliegen. Die Höhe des Freiraums 18 (Abstand zwischen der Unterseite der Haltevorrichtung 10 und der Radaufstandsfläche) beträgt bevorzugt zwischen 99 mm und 110 mm, insbesondere 105 mm.

Von der Radschse (Mitte) bis zur Aufnahmefläche für die Gabeln am Bottichwagen ist der Abstand zwischen 40 mm und 50 mm. Im angehobenen Zustand liegt der Bottichwagen mit der Unterseite der Haltevorrichtung 10 zumindest teilweise auf der Oberseite der Gabelzinken auf. Das Funktionselement 17 dient zur Sicherung der Lage des Bottichwagens auf den Gabelzinken. Das Funktionselement 17 bildet bevorzugt eine linienförmige Anlage für die Gabelzinken aus. Die Funktionsfläche 17 verhindert, dass der Bottichwagen 6 beispielsweise bei einem holprigen oder ruckelnden Transport von den Gabelzinken herunterkippt. Da die Gabelzinken gegenüber der Horizontalen leicht angestellt sind, kann auch verhindert werden, dass der Bottichwagen nach vorne von den Gabelzinken herunterrutscht.

## Patentansprüche

**1.** Bottichwagen (6), der in eine Knetmaschine einer industriellen Teigproduktionsanlage einbringbar ist, aufweisend ein Untergestell (9) und einen Bottich (7), der drehbar auf dem Untergestell (9) gelagert ist, wobei das Untergestell (9) wenigstens eine Haltevorrichtung (10) mit zwei daran gelagerten Rädern (11') und eine Stützgeometrie (12) aufweist, wobei an der Stützgeometrie (12) wenigstens ein Stützrad (13) gelagert ist, **dadurch gekennzeichnet, dass** die Haltevorrichtung (10) und die Stützgeometrie (12) derart ausgebildet sind, dass sich zwischen einer Unterseite der Haltevorrichtung (10) und/oder einer Unterseite der Stützgeometrie (12) und einer Radaufstandsfläche ein Freiraum ergibt, in den ein Lastaufnahmemittel (2) eines fahrerlosen Transportfahrzeuges (1) einbringbar ist.

**2.** Bottichwagen nach Anspruch 1, **dadurch gekennzeichnet, dass** an der Stützgeometrie (12) ein Funktionselement (17) angeordnet ist, das den Freiraum (18) begrenzt und eine Anlagefläche für das Lastaufnahmemittel ausbildet.

**3.** Bottichwagen nach Anspruch 2, **dadurch gekennzeichnet, dass** das Funktionselement (17) zwischen Stützrad (13) und Haltevorrichtung (10) liegt und eine Breite aufweist, die in einem Bereich von 280 mm bis 500 mm liegt.

**4.** Bottichwagen nach Anspruch 2 oder 3, **dadurch gekennzeichnet, dass** der mittlere Abstand zwischen der Anlagefläche des Funktionselementes (17) und der Haltevorrichtung (10) senkrecht zur Längsachse der Haltevorrichtung (10) zwischen 280 mm und 400mm beträgt.

**5.** Bottichwagen nach einem der vorhergehenden Ansprüche, **dadurch gekennzeichnet, dass** der Bottich (7) mit einer Welle verbunden ist, auf der unterhalb des Bottichs (7) eine Bottichscheibe (8) drehfest sitzt, die mit der Knetmaschine zum Drehen des Bottichs (7) in Wirkverbindung bringbar ist.

**6.** Bottichwagen nach einem der vorhergehenden Ansprüche, **dadurch gekennzeichnet, dass** der Freiraum (18) eine Höhe zwischen 99 mm und 110 mm aufweist.

**7.** Verwendung eines Bottichwagens (6) nach einem der vorhergehenden Ansprüche zum Transport durch ein fahrerloses Transportfahrzeug (1) in einer industriellen Teigproduktionsanlage, wobei das fahrerlose Transportfahrzeug (1) ein aktives Lastaufnahmemittel (2) aufweist, und das aktive Lastaufnahmemittel zwei parallel angeordnete Gabelzinken sind.

**8.** Verfahren zum Nachrüsten eines Bottichwagens (6), der in eine Knetmaschine einer industriellen Teigproduktionsanlage einbringbar ist, aufweisend ein Untergestell (9) und einen Bottich (7), der drehbar auf dem Untergestell (9) gelagert ist, sowie einen Griff (14) zum manuellen Verfahren, wobei das Untergestell (9) eine Haltevorrichtung (10) mit zwei daran gelagerten Rädern (11,11') und eine Stützgeometrie (12) aufweist, wobei an der Stützgeometrie (12) wenigstens ein Stützrad (13) gelagert ist, und wobei das Verfahren die folgenden Schritte aufweist:
- Vorsehen von zwei unterschiedlichen Achspositionen (16,17), die senkrecht zu der Drehachse der Räder (11,11') zueinander beabstandet sind,
und wobei für den Transport mit einem fahrerlosen Transportfahrzeug das Verfahren die folgenden Schritte umfasst:
- Aufsetzen von Rädern (11') auf eine griffnahe Achsposition (17), wobei die Räder (11') einen Durchmesser haben, der in einem Bereich von 250 mm und 350 mm liegt, und dadurch Anheben der Unterseite der Haltevorrichtung (10) relativ zur Radaufstandsfläche.

**10.** Verfahren nach Anspruch 8, **dadurch gekennzeichnet, dass** das Verfahren den Folgenden weiteren Schritt umfasst:
- Anbringen eines Funktionselementes (17) an der Unterseite der Stützgeometrie (12) und dadurch Ausbilden einer Anlagefläche für ein Lastaufnahmemittel des fahrerlosen Transportfahrzeugs.

## Geänderte Patentansprüche

### Geänderte Patentansprüche gemäss Regel 137(2) EPÜ.

1. Verwendung eines Bottichwagens (6) in einer Knetmaschine einer industriellen Nahrungsmittelteigproduktionsanlage sowie zum Transport durch ein fahrerloses Transportfahrzeug (1) in der industriellen Nahrungsmittelteigproduktionsanlage mittels eines aktiven Lastaufnahmemittels, wobei der Bottichwagen ein Untergestell (9) und einen Bottich (7) aufweist, der drehbar auf dem Untergestell (9) gelagert ist, wobei das Untergestell (9) wenigstens eine Haltevorrichtung (10) mit zwei daran gelagerten Rädern (11') und eine Stützgeometrie (12) aufweist, wobei an der Stützgeometrie (12) wenigstens ein Stützrad (13) gelagert ist, und wobei die Haltevorrichtung (10) und die Stützgeometrie (12) derart ausgebildet sind, dass sich zwischen einer Unterseite der Haltevorrichtung (10) und/oder einer Unterseite der Stützgeometrie (12) und einer Radaufstandsfläche ein Freiraum (18) ergibt, der eine Höhe zwischen 99 mm und 110 mm aufweist und in den das aktive Lastaufnahmemittel (2) in Form von zwei parallel angeordnete Gabelzinken des fahrerlosen Transportfahrzeuges (1) zum Transport eingebracht ist.

2. Verwendung nach Anspruch 1, **dadurch gekennzeichnet, dass** an der Stützgeometrie (12) ein Funktionselement (19) angeordnet ist, das den Freiraum (18) begrenzt und eine Anlagefläche für das Lastaufnahmemittel ausbildet.

3. Verwendung nach Anspruch 2, **dadurch gekennzeichnet, dass** das Funktionselement (19) zwischen Stützrad (13) und Haltevorrichtung (10) liegt und eine Breite aufweist, die in einem Bereich von 280 mm bis 500 mm liegt.

4. Verwendung nach Anspruch 2 oder 3, **dadurch gekennzeichnet, dass** der mittlere Abstand zwischen der Anlagefläche des Funktionselementes (19) und der Haltevorrichtung (10) senkrecht zur Längsachse der Haltevorrichtung (10) zwischen 280 mm und 400mm beträgt.

5. Verwendung nach einem der vorhergehenden Ansprüche, **dadurch gekennzeichnet, dass** der Bottich (7) mit einer Welle verbunden ist, auf der unterhalb des Bottichs (7) eine Bottichscheibe (8) drehfest sitzt, die mit der Knetmaschine zum Drehen des Bottichs (7) in Wirkverbindung bringbar ist.

6. Verfahren zum Nachrüsten eines Bottichwagens (6), der in eine Knetmaschine einer industriellen Teigproduktionsanlage einbringbar ist, aufweisend ein Untergestell (9) und einen Bottich (7), der drehbar auf dem Untergestell (9) gelagert ist, sowie einen Griff (14) zum manuellen Verfahren, wobei das Untergestell (9) eine Haltevorrichtung (10) mit zwei daran gelagerten Rädern (11,11') und eine Stützgeometrie (12) aufweist, wobei an der Stützgeometrie (12) wenigstens ein Stützrad (13) gelagert ist, und wobei das Verfahren die folgenden Schritte aufweist:
- Vorsehen von zwei unterschiedlichen Achspositionen (16,17), die senkrecht zu der Drehachse der Räder (11,11') zueinander beabstandet sind,
und wobei für den Transport mit einem fahrerlosen Transportfahrzeug das Verfahren die folgenden Schritte umfasst:
- Aufsetzen von Rädern (11') auf eine griffnahe Achsposition (17), wobei die Räder (11') einen Durchmesser haben, der in einem Bereich von 250 mm und 350 mm liegt, und dadurch Anheben der Unterseite der Haltevorrichtung (10) relativ zur Radaufstandsfläche.

7. Verfahren nach Anspruch 6, **dadurch gekennzeichnet, dass** das Verfahren den Folgenden weiteren Schritt umfasst:
- Anbringen eines Funktionselementes (19) an der Unterseite der Stützgeometrie (12) und dadurch Ausbilden einer Anlagefläche für ein Lastaufnahmemittel des fahrerlosen Transportfahrzeugs.
